# EUROPÄISCHE PATENTSCHRIFT

(11) **EP 2 377 591 B1**
(45) Veröffentlichungstag und Bekanntmachung des Hinweises auf die Patenterteilung: **04.01.2017**
(21) Anmeldenummer: 11161257.8
(22) Anmeldetag: 06.04.2011
(51) Int. Cl.: B01D 35/147, B01D 35/153, B01D 29/23, B01D 29/58

(54) **Filtereinrichtung**
Filter device
Dispositif de filtration

(30) Priorität: 16.04.2010 DE 102010015494
(43) Veröffentlichungstag der Anmeldung: 19.10.2011
(73) Patentinhaber: MAHLE International GmbH, 70376 Stuttgart (DE)
(72) Erfinder: Kuhn, Harald, 74196 Neuenstadt (DE); Schick, Albert, 74336 Brackenheim (DE); Ruf, Thorsten, 74206 Bad Wimpfen (DE)
(74) Vertreter: BRP Renaud & Partner mbB Rechtsanwälte Patentanwälte Steuerberater

(56) Entgegenhaltungen:
- EP-A1- 1 504 801
- EP-A1- 1 967 247
- WO-A1-2007/090249
- DE-C1- 19 917 031
- US-A- 1 175 948
- US-A- 3 333 697
- US-A- 3 855 127

## Beschreibung

Die vorliegende Erfindung betrifft eine Filtereinrichtung, insbesondere ein Flüssigkeitsfilter, zum Entfernen von festen oder flüssigen Verunreinigungen aus einem Fluidstrom, insbesondere aus einem Flüssigkeitsstrom oder aus einem Gasstrom.

Üblicherweise umfasst eine Filtereinrichtung ein Gehäuse, das zwei Gehäuseanschlüsse aufweist, von denen der eine einen rohseitigen Einlass bildet, während der andere einen reinseitigen Auslass bildet. In das Gehäuse ist üblicherweise ein Filterelement eingesetzt, das einen ringförmigen Filterkörper aufweist, der einen Filterinnenraum in Umfangsrichtung umschließt und von einem Filteraußenraum in Umfangsrichtung umschlossen ist, wobei der Filteraußenraum seinerseits vom z. B. zylindrischen Gehäuse in Umfangsrichtung umschlossen ist. Bei einem von außen nach innen durchströmten Filterkörper gehört der Außenraum zu einer mit dem Einlass fluidisch verbundenen Rohseite, während der Innenraum zu einer mit dem Auslass fluidisch verbundenen Reinseite gehört.

Das Dokument DE 199 17 031 C1 offenbart eine Filtervorrichtung, insbesondere einen Saugrücklauffilter, mit einem Filtergehäuse, das zwei Nutzanschlüsse und einen Tankanshluß aufweist und das der Aufnahme zwei Filterelement dient.

Die vorliegende Erfindung beschäftigt sich mit dem Problem, für eine Filtereinrichtung der eingangs genannten Art eine verbesserte Ausführungsform anzugeben, die sich insbesondere dadurch auszeichnet, dass sie vergleichsweise kompakt baut und/oder einfach handhabbar ist und/oder einfach herstellbar ist und/oder eine hohe Funktionsdichte aufweist.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Filtereinrichtung mit einem Einsatz auszustatten, der bezüglich des Gehäuses und insbesondere auch bezüglich des Filterelements ein separates Bauteil bildet. Dieser Einsatz ist dabei so ausgestaltet, dass er den einen Gehäuseanschluss mit dem Filterinnenraum fluidisch verbindet. Durch diese Bauweise kann die Positionierung der beiden Gehäuseanschlüsse am Gehäuse relativ frei gewählt werden, da über den Einsatz stets der eine Gehäuseanschluss mit dem Filterinnenraum fluidisch verbunden werden kann, während der andere Gehäuseanschluss einfach mit dem Filteraußenraum fluidisch gekoppelt ist. Dementsprechend übernimmt der Einsatz eine Strömungsführungsfunktion im Inneren des Gehäuses, um den einen Gehäuseanschluss mit dem Filterinnenraum fluidisch zu verbinden. Da das Gehäuse insoweit diese Strömungsführungsfunktion nicht selbst realisieren muss, ergibt sich für das Gehäuse eine extreme Vereinfachung hinsichtlich seiner Herstellbarkeit. Beispielsweise ist es möglich, das Gehäuse zumindest im Bereich der Gehäuseanschlüsse aus einem Stück herzustellen, insbesondere als Gussteil. Des Weiteren ermöglicht die erfindungsgemäße Trennung der Strömungsführungsfunktion zwischen dem einen Gehäuseeinlass und dem Filterinnenraum von der Gestaltung des Gehäuses eine größere Freiheit für die Anordnung bzw. Positionierung der Anschlüsse am Gehäuse. Insbesondere lassen sich die Gehäuseanschlüsse am Gehäuse einfacher so anordnen, dass die Handhabung der Filtereinrichtung, beispielsweise zum Anschließen einer Zulaufleitung und einer Ablaufleitung, vereinfacht ist.

Entsprechend einer vorteilhaften Ausführungsform kann der Einsatz integral am Filterelement ausgeformt sein. Hierdurch erhält das Filterelement eine Zusatzfunktion. Gleichzeitig wird dadurch sichergestellt, dass das Filterelement nicht ohne den Einsatz montiert werden kann, wodurch fehlerhafte Montagen vermieden werden können. Außerdem lässt sich auf diese Weise die Einheit aus Filterelement und Einsatz besonders preiswert realisieren.

Gemäß einer vorteilhaften Weiterbildung kann das Filterelement zwei den Filterkörper axial begrenzende Endscheiben aufweisen, wobei der Einsatz an einer dieser Endscheiben integral ausgeformt ist. Hierdurch kann besagte Endscheibe zusammen mit dem Einsatz beispielsweise mittels Spritzgusstechnik in einem Stück hergestellt werden, wobei anschließend der Filterkörper an die am Einsatz ausgeformte Endscheibe angebaut werden kann, beispielsweise durch Einplastifizieren, Verschweißen oder Verkleben.

Gemäß der Erfindung ist im Gehäuse ein Zusatzfilterelement fluidisch zwischen dem Filterinnenraum und einem vom Einsatz umschlossenen Einsatzinnenraum angeordnet. Das Zusatzfilterelement, das bezüglich der Strömungsrichtung des zu reinigenden Fluids zwischen dem Filterinnenraum und dem Einsatzinnenraum angeordnet ist, kann die Reinigungswirkung des Filterelements verbessern. Auch ermöglicht das Zusatzfilterelement eine Reinigung des Fluids, falls das Filterelement durch einen Bypass von der Fluidströmung umgangen wird.

Besonders vorteilhaft ist dabei eine Anordnung, bei welcher das Zusatzfilterelement bezüglich des Filterelements in Reihe angeordnet ist, so dass in einem Normalbetrieb zuerst das Filterelement und anschließend das Zusatzfilterelement vom zu reinigenden Fluid durchströmt werden.

Gemäß einer Weiterbildung kann das Zusatzfilterelement im Einsatzinnenraum also im Inneren des Einsatzes angeordnet sein. Hierdurch kann der im Einsatz vorhandene Innenraum besonders geschickt ausgenutzt werden, um das Zusatzfilterelement unterzubringen.

Entsprechend einer vorteilhaften Weiterbildung kann ein Filterkörper des Zusatzfilterelements im Einsatzinnenraum einen mit dem Filterinnenraum fluidisch verbundenen Zusatzfilterinnenraum in Umfangsrichtung umschließen, so dass es sich beim Zusatzfilterelement ebenfalls um ein Ringfilterelement handelt. Hierdurch lassen sich die Filterinnenräume des Filterelements und des Zusatzfilterelrements besonders einfach fluidisch miteinander verbinden.

Gemäß einer zweckmäßigen Weiterbildung kann der Filterkörper des Zusatzfilterelements an einer vom Filterinnenraum abgewandten Axialseite mit einer Endscheibe begrenzt sein, die auch den Zusatzfilterinnenraum axial begrenzt. Somit kann das Fluid vom Filterinnenraum des Filterelements in den Zusatzfilterinnenraum des Zusatzfilterelements axial einströmen, muss jedoch anschließend den Filterkörper des Zusatzfilterelements durchströmen, um in den Bereich des Einsatzinnenraums zu gelangen, der das Zusatzfilterelement umschließt und der mit dem zugehörigen Gehäuseanschluss (Auslass) fluidisch verbunden ist.

Bei einer anderen vorteilhaften Ausführungsform kann der Einsatz integral am Zusatzfilterelement ausgeformt sein. Somit erhält das Zusatzfilterelement bzw. erhält der Einsatz eine Zusatzfunktion. Gleichzeitig reduzieren sich die Herstellungskosten. Hierdurch kann außerdem erreicht werden, dass beim Montieren des Einsatzes gleichzeitig auch das Zusatzfilterelement montiert wird, wodurch Montagefehler vermieden werden können.

Gemäß einer zweckmäßigen Weiterbildung kann das Zusatzfilterelement zwei Endscheiben aufweisen, die einen Filterkörper des Zusatzfilterelements axial begrenzen, wobei der Einsatz an einer der Endscheiben integral ausgeformt ist. Insbesondere lassen sich somit der Einsatz und die jeweilige Endscheibe, beispielsweise mittels Spritzgusstechnik, in einem Stück herstellen. Der Filterkörper kann dann an die am Einsatz ausgeformte Endscheibe angebaut werden. Beispielsweise durch Einplastifizieren oder durch Verschweißen oder Verkleben.

Gemäß einer anderen zweckmäßigen Ausführungsform kann das Zusatzfilterelement integral am Filterelement ausgeformt sein. Hierdurch erhält das Filterelement eine Zusatzfunktion. Insbesondere kann dadurch gewährleistet sein, dass bei der Montage des Filterelements automatisch auch das Zusatzfilterelement montiert wird. Montagefehler lassen sich dadurch reduzieren.

Zweckmäßig kann bei einer Weiterbildung dabei vorgesehen sein, dass der Filterkörper des Filterelements und ein Filterkörper des Zusatzfilterelements mittels einer gemeinsamen Endscheibe axial begrenzt sind. Hierdurch lassen sich mit drei Endscheiben zwei Filterelemente axial begrenzen. Die gemeinsame mittlere Endscheibe besitzt dabei eine Doppelfunktion, da sie beide Filterelemente axial begrenzt.

Besonders vorteilhaft ist eine Ausführungsform, bei welcher der Einsatz integral an der gemeinsamen Endscheibe der beiden Filterelemente ausgeformt ist. Hierdurch lässt sich eine vergleichsweise komplexe Baugruppe realisieren, welche das Filterelement, den Einsatz und das Zusatzfilterelement umfasst. Beim Montieren des Filterelements werden dadurch zwangsläufig auch der Einsatz und das Zusatzfilterelement montiert, was Montagefehler reduziert. Gleichzeitig lässt sich die vergleichsweise komplexe Baugruppe relativ preiswert realisieren.

Entsprechend einer vorteilhaften Ausführungsform kann ein Unterdrucköffnungsventil zum Steuern einer fluidischen Verbindung zwischen einer Umgebung des Gehäuses und den Filterinnenraum vorgesehen sein. Dieses Unterdrucköffnungsventil öffnet bei einem vorbestimmten Unterdruck im Filterinnenraum. Zweckmäßig gehört der Filterinnenraum zur Reinseite, so dass das Unterdrucköffnungsventil bei einem reinseitigen Unterdruck öffnet. In einer bevorzugten Verwendung der Filtereinrichtung ist das Gehäuse zumindest teilweise in einem Tank angeordnet, in dem das Fluid bevorratet wird, das in einem Fluidkreis zirkuliert, in welchen die Filtereinrichtung eingebunden ist, um das Fluid permanent zu reinigen. Dabei kann der Auslass der Filtereinrichtung mit der Saugseite einer Fördereinrichtung, z.B. Pumpe, verbunden sein. Hierdurch kann es auf der Reinseite zu einem Unterdruck kommen, falls über den Einlass der Filtereinrichtung nicht ausreichend Fluid nachströmen kann oder falls bei einem zugesetzten Filterelement der Druckabfall über das Filterelement zu groß wird. Bei im Tank angeordneten Gehäuse kann dann die stromab des Auslasses angeordnete Fördereinrichtung fluid aus dem Tank ansaugen. Das Fluid umgeht dabei den Filterkörper des Filterelements und gelangt vom Tank direkt in den Filterinnenraum. Sofern gemäß einer besonders vorteilhaften Ausführungsform dem Filterelement das zuvor genannte Zusatzfilterelement nachgeordnet ist, kann die direkt aus dem Tank angesaugte Fluidströmung durch das Zusatzfilterelement gefiltert werden. Auf diese Weise ist sichergestellt, dass nur gefiltertes Fluid aus dem Auslass der Filtereinrichtung austritt.

Bei einer anderen Ausführungsform kann ein erstes Überdrucköffnungsventil zum Steuern einer fluidischen Verbindung zwischen einer Umgebung des Gehäuses und dem Filterinnenraum vorgesehen sein. Das erste Überdrucköffnungsventil öffnet bei einem vorbestimmten Überdruck im Filterinnenraum. Bei der bevorzugten Anordnung handelt es sich somit um einen vorbestimmten reinseitigen Überdruck, ab dem das erste Überdrucköffnungsventil öffnet und somit eine Entspannung aus der Reinseite in die Umgebung des Gehäuses ermöglicht. Sofern das Gehäuse in dem zuvor genannten Tank angeordnet ist, kann das Fluid somit in den Tank entspannt werden. Zweckmäßig kann der Einlass der Filtereinrichtung mit der Druckseite einer Fördereinrichtung, z.B. einer Pumpe, verbunden sein. Diese bezüglich der Filtereinrichtung druckseitige Fördereinrichtung kann eine bestimmte Fluidmenge dem Einlass zuführen. Ferner kann der Auslass der Filtereinrichtung mit der Saugseite einer weiteren Fördereinrichtung, z.B. einer Pumpe, verbunden sein. Diese bezüglich der Filtereinrichtung saugseitige Fördereinrichtung zieht eine bestimmte Menge an Fluid vom Auslass ab. Fördert die druckseitige Fördereinrichtung mehr Fluid durch den Einlass in das Gehäuse als die saugseitige Fördereinrichtung am Auslass des Gehäuses abzieht, erhöht sich im Gehäuseinneren der Druck. Insbesondere kann dabei auch der Druck auf der Reinseite, also im Filterinnenraum ansteigen, zur Vermeidung eines übermäßigen reinseitigen Druckanstiegs öffnet dann das erste Überdrucköffnungsventil und begrenzt dadurch den Druck im Filterinnenraum auf einen vorbestimmten reinseitigen Überdruck. Insbesondere kann dabei das von der druckseitigen Fördereinrichtung geförderte überschüssige Fluid in den Tank entleert werden.

Besonders vorteilhaft ist eine Weiterbildung, bei welcher das Unterdrucköffnungsventil und das erste Überdrucköffnungsventil baulich ineinander integriert sind.

Gemäß einer anderen zweckmäßigen Ausführungsform kann ein zweites Überdrucköffnungsventil zum Steuern einer fluidischen Verbindung zwischen einer Umgebung des Gehäuses und dem Filteraußenraum vorgesehen sein. Dieses zweite Überdrucköffnungsventil öffnet bei einem vorbestimmten Überdruck im Filteraußenraum. Bei der bevorzugten Verschaltung der Filtereinrichtung gehört der Filteraußenraum zur Rohseite, so dass das zweite Überdrucköffnungsventil bei einem vorbestimmten rohseitigen Überdruck öffnet. Insbesondere bei einer Verschmutzung des Filterelements kann der Durchströmungswiderstand des Filterelements so stark ansteigen, dass der rohseitige Druck den vorbestimmten Grenzdruck erreicht. Dann öffnet das zweite Überdrucköffnungsventil, so dass das rohseitige Fluid in die Umgebung, vorzugsweise in besagten Tank entspannt werden kann.

Sofern sowohl ein erstes Überdrucköffnungsventil als auch ein zweites Überdrucköffnungsventil vorgesehen sind, ist der vorbestimmte rohseitige Überdruck, bei dem das zweite Überdrucköffnungsventil öffnet, zweckmäßig größer gewählt als der vorbestimmte reinseitige Überdruck, ab dem das erste Überdrucköffnungsventil öffnet. Hierdurch kann ein vorbestimmter maximaler Durchströmungswiderstand des Filterelements berücksichtigt werden.

Das der Erfindung zugrunde liegende Problem kann alternativ zur Filtereinrichtung gemäß Anspruch 1 auch durch eine Filtereinrichtung gemäß Anspruch 11 gelöst werden. Eine derartige Filtereinrichtung umfasst ein Gehäuse, das einen rohseitigen Einlass und einen reinseitigen Auslass aufweist, zumindest ein Filterelement, das im Gehäuse einen mit dem Auslass fluidisch verbunden Filterinnenraum von einem mit dem Einlass fluidisch verbundenen Filteraußenraum trennt, ein Zusatzfilterelement, das fluidisch zwischen dem Filterinnenraum und dem Auslass angeordnet ist, ein Unterdrucköffnungsventil zum Steuern einer fluidischen Verbindung zwischen einer Umgebung des Gehäuses und dem Filterinnenraum, ein erstes Überdrucköffnungsventil zum Steuern einer fluidischen Verbindung zwischen der Umgebung des Gehäuses und dem Filterinnenraum und ein zweites Überdrucköffnungsventil zum Steuern einer fluidischen Verbindung zwischen der Umgebung des Gehäuses und dem Filteraußenraum.

Diese alternative Lösung beruht auf dem allgemeinen Gedanken, für die Filtereinrichtung zumindest drei unterschiedliche Durchströmungszustände zu realisieren, wobei gleichzeitig für jeden Durchströmungszustand gewährleistet ist, dass nur gefiltertes Fluid durch den Auslass austritt. Beispielsweise kann in einem Normalbetrieb dem Einlass zu filterndes Fluid zugeführt werden, wobei gleichzeitig am Auslass gefiltertes Fluid abgeführt wird. Sofern weniger Fluid abgeführt werden kann, als zugeführt wird, kommt es im Filterinnenraum rohseitig und reinseitig zu einem Druckanstieg. Übersteigt dieser einen vergleichsweise niedrigen vorbestimmten reinseitigen Grenzwert, kann das überschüssige Fluid über das erste Überdrucköffnungsventil in die Umgebung, zweckmäßig in einen Tank, abgelassen werden. Bei diesem Betriebszustand durchströmt das aus dem Auslass austretende Fluid das Filterelement und danach das Zusatzfilterelement.

In einem anderen Betriebszustand wird dem Einlass zuwenig oder kein Fluid zugeführt, während am Auslass nach wie vor Fluid angesaugt wird. Hierdurch fällt der reinseitige Druck im Filterinnenraum, wodurch das Unterdrucköffnungsventil anspricht und bei in den Tank eingetauchtem Gehäuse der Filtereinrichtung ein Ansaugen des Fluids unmittelbar aus dem Tank ermöglicht. Das Fluid strömt dabei vom Tank direkt in den Filterinnenraum, also auf die Reinseite des Filterelements. Das Fluid muss jedoch das Zusatzfilterelement durchströmen, um zum Auslass zu gelangen.

In einem weiteren Betriebszustand kann das Filterelement verschmutzt sein, so dass das über den Einlass zugeführte Fluid das Filterelement nicht durchströmen kann, sondern vielmehr aufgrund des rohseitigen Druckanstiegs über das zweite Überdrucköffnungsventil in den Tank abgeführt wird. Bei verschmutztem Filterelement ist es dabei noch immer möglich, am Auslass Fluid anzusaugen, nämlich über das Unterdrucköffnungsventil, so dass unmittelbar aus dem Tank Fluid angesaugt werden kann. Das aus dem Tank angesaugte Fluid umgeht dabei zwar das Filterelement, muss jedoch das Zusatzfilterelement durchströmen, um zum Auslass zu gelangen. Bemerkenswert ist, dass in diesem Zustand für das über den Einlass zugeführte Fluid und für das am Auslass angesaugte Fluid innerhalb der Filtereinrichtung zwei getrennte Fluidpfade ausgebildet werden, die über das Unterdrucköffnungsventil und über das zweite Überdrucköffnungsventil separat gesteuert werden.

Zweckmäßig kann diese zweite Lösung ebenfalls mit einem Einsatz analog zur ersten Lösung ausgestattet sein, so dass insbesondere auch die vorstehend zur ersten Lösung vorgestellten vorteilhaften Ausführungsformen auch bei der zweiten Lösung realisierbar sind.

Die vorstehenden Ausführungsformen lassen sich darüber hinaus mit den nachfolgend noch erläuterten Ausführungsformen beliebig kombinieren, und zwar sowohl hinsichtlich der ersten Lösung als auch hinsichtlich der zweiten Lösung. Entsprechend einer vorteilhaften Ausführungsform kann der Einsatz zwei Einsatzanschlüsse aufweisen und einen Einsatzinnenraum in Umfangsrichtung umschließen. Die beiden Einsatzanschlüsse sind dabei mit dem Einsatzinnenraum fluidisch verbunden. Der eine Einsatzanschluss kann dann den einen Gehäuseanschluss mit dem Einlassinnenraum fluidisch verbinden, während der andere Einsatzanschluss den Einsatzinnenraum mit dem Filterinnenraum fluidisch verbindet. Der andere Gehäuseanschluss kann dann einfach mit dem Filteraußenraum direkt oder indirekt fluidisch verbunden sein. Besonders zweckmäßig kann dabei eine Ausführungsform sein, bei welcher der Einsatz von einem Einsatzaußenraum in Umfangsrichtung umschlossen ist, der seinerseits vom Gehäuse in Umfangsrichtung umschlossen ist. Bei dieser Ausführungsform ist dann der andere Gehäuseanschluss mit dem Einlassaußenraum fluidisch verbunden, wobei der Einsatzaußenraum seinerseits mit dem Filteraußenraum fluidisch verbunden, insbesondere offen in diesen übergeht. Diese Ausführungsformen führen zu einem besonders einfachen Aufbau für den Einsatz, wodurch dieser relativ preiswert herstellbar ist.

Gemäß der Erfindung sind die beiden Anschlüsse am Gehäuse im selben Axialabschnitt und auf der gleichen Seite des Gehäuses angeordnet.

Die folgenden Maßnahmen können kumulativ oder alternativ realisiert werden und dienen dabei jeweils zur Verbesserung der Handhabung der Filtereinrichtung.

Beispielsweise können die beiden Anschlüsse in derselben Axialebene, des Gehäuses angeordnet sein, wobei die Axialrichtung des Gehäuses parallel zu einer Längsmittelachse des Gehäuses orientiert ist. Zusätzlich oder alternativ können die beiden Anschlüsse am Gehäuse in Umfangsrichtung nebeneinander angeordnet sein. Zusätzlich oder alternativ können die beiden Anschlüsse zumindest in einem vom Gehäuse abgewandten Außenabschnitt parallel zueinander verlaufen.

Bei einer anderen vorteilhaften Ausführungsform kann das Gehäuse einen Anschlussabschnitt und einen axial daran anschließenden Aufnahmeabschnitt aufweisen. Der Anschlussabschnitt besitzt die beiden Gehäuseanschlüsse und umschließt den Einsatz in Umfangsrichtung. Der Aufnahmeabschnitt enthält das Filterelement und umschließt den Filterkörper bzw. den Filteraußenraum in Umfangsrichtung. Die beiden Gehäuseabschnitte sind dabei an ihre jeweilige Funktion besonders einfach anpassbar, was die Herstellbarkeit des Gehäuses vereinfacht. Besonders zweckmäßig ist dabei eine Ausführungsform, bei welcher der Anschlussabschnitt und der Aufnahmeabschnitt separate Bauteile sind. Mit anderen Worten, der Aufnahmeabschnitt ist an den Anschlussabschnitt angebaut oder umgekehrt. Bei der gebauten Ausführungsform ist es insbesondere möglich, unterschiedliche Aufnahmeabschnitte bereitzustellen, die mit gleichen Anschlussabschnitten verbaut werden können, um die Filtereinrichtung einfach zur Aufnahme unterschiedlicher Filterelemente bzw. einer unterschiedlichen Anzahl an Filterelementen adaptieren zu können, ohne dafür das gesamte Gehäuse neu konzipieren zu müssen. Alternativ ist grundsätzlich auch eine integrale Bauweise denkbar. Das Gehäuse ist dann mit dem Anschlussabschnitt und dem Aufnahmeabschnitt aus einem Stück hergestellt, insbesondere spritzgeformt.

Vorzugsweise kann hierzu der Aufnahmeabschnitt einen in Umfangsrichtung umlaufenden, nach außen abstehenden Außenkragen aufweisen, der sich axial an einem Innenkragen abstützt, der am Anschlussabschnitt in Umfangsrichtung umlaufend, nach innen abstehend ausgebildet ist. Somit lassen sich Aufnahmeabschnitt und Anschlussabschnitt ineinander stecken, was die Montage erheblich vereinfacht.

Entsprechend einer vorteilhaften Ausführungsform kann der Einsatz an seiner Außenseite zumindest einen Axialanschlag aufweisen, mit dem er axial an einem Gegenanschlag abgestützt ist, der am Gehäuse ausgebildet ist. Mit Hilfe einer derartigen Kombination aus Axialanschlag und Gegenanschlag kann die axiale Positionierung des Einsatzes im Gehäuse vorgegeben werden, was beispielsweise die Realisierung einer hinreichend dichten fluidischen Verbindung zwischen dem einen Gehäuseanschluss und dem Filterinnenraum durch den Einsatz vereinfacht.

Entsprechend einer vorteilhaften Weiterbildung kann zumindest ein solcher Axialanschlag durch ein am Einsatz ausgebildetes Anschlagelement gebildet sein. Alternativ oder zusätzlich kann zumindest ein solcher Axialanschlag durch einen Radialstutzen gebildet sein, den der eine Einsatzanschluss aufweist und der sich, insbesondere durch den Einsatzaußenraum, zu dem einen Gehäuseanschluss erstreckt. Besonders zweckmäßig ist eine Ausführungsform, bei welcher das Anschlagelement und ein solcher Radialstutzen, unabhängig davon, ob er als weiterer Axialanschlag dient oder nicht, zueinander diametral gegenüberliegend am Einsatz angeordnet sind. Hierdurch kann eine besonders stabile Abstützung des Einsatzes am Gehäuse realisiert werden. Auch lässt sich dadurch eine Radialkraft in den Radialstutzen einleiten.

Ein derartiges Anschlagelement kann außerdem als Drehsicherung verwendet werden, um den Einsatz in einer vorbestimmten Drehlage relativ zum Gehäuse, insbesondere zum Anschlussabschnitt, zu fixieren, was eine dichte fluidische Verbindung zwischen dem einen Gehäuseanschluss und dem Einsatz bzw. dem einen Einsatzanschluss vereinfacht. Zu diesem Zweck kann das jeweilige Anschlagelement mit einer Axialführung zusammenwirken, die hierzu am Gehäuse, insbesondere am Anschlussabschnitt, ausgebildet ist.

Bei einer anderen vorteilhaften Ausführungsform kann der Gegenanschlag am Aufnahmeabschnitt, vorzugsweise am Außenkragen, ausgebildet sein, so dass der Einsatz über den wenigstens einen Axialanschlag den Aufnahmeabschnitt axial gegen den Anschlussabschnitt andrückt. Insbesondere kann dabei auf eine separate Befestigung des Aufnahmeabschnitts am Anschlussabschnitt verzichtet werden, da die Festlegung des Aufnahmeabschnitts am Anschlussabschnitt über die Montage des Einsatzes erfolgt. Zweckmäßig sind daher Aufnahmeabschnitt und Anschlussabschnitt nicht fest miteinander verbunden, sondern lose aneinander angeordnet.

Gemäß einer anderen vorteilhaften Ausführungsform kann das Gehäuse einen Deckel aufweisen, der eine axiale Wartungsöffnung verschließt, durch die hindurch das Filterelement und der Einsatz in das Gehäuse einsetzbar und daraus entnehmbar sind. Vorteilhaft ist dabei eine Weiterbildung, bei welcher der Deckel außerdem eine axial offene Seite des Einsatzes verschließt. Hierdurch erhält der Deckel eine Zusatzfunktion, da er zum einen die Montageöffnung des Gehäuses verschließt und zum anderen die offene Seite des Einsatzes verschließt. Hierdurch kann der Einsatz einfacher hergestellt werden, beispielsweise als Gussteil.

Entsprechend einer besonders vorteilhaften Ausführungsform kann nun dieser Deckel den Einsatz über den wenigstens einen Axialanschlag axial gegen das Gehäuse andrücken. Somit erhält der Deckel eine weitere Zusatzfunktion, nämlich die axiale Positionierung des Einsatzes im Gehäuse. Gleichzeitig kann dadurch auch eine Verpressung zwischen dem einen Einsatzanschluss und dem einen Gehäuseanschluss bzw. einer dazwischen angeordneten Dichtung realisiert werden.

Der eine Einsatzanschluss kann entsprechend einer vorteilhaften Ausführungsform einen Radialstutzen aufweisen, der sich, insbesondere durch den Einsatzaußenraum, zum zugehörigen Gehäuseanschluss erstreckt. Der zugehörige Gehäuseanschluss weist hierbei an einer dem Einsatz zugewandten Innenseite des Gehäuses eine Dichtfläche auf, die in einer Dichtebene liegt und die den zugehörigen Gehäuseanschluss umschließt. Der Radialstutzen kann nun an seinem vom Einsatz abgewandten Ende eine Dichtung aufweisen, die den zugehörigen Einsatzanschluss umschließt und die an der Dichtfläche anliegt. Hierdurch wird eine einfach montierbare Axialdichtung geschaffen, die eine hinreichende Abdichtung zwischen Rohseite und Reinseite ermöglicht.

Besonders vorteilhaft ist dabei eine Ausführungsform, bei welcher die Dichtebene gegenüber einer Längsmittelachse des Gehäuses geneigt ist. Durch diese Neigung wird erreicht, dass die Dichtung erst in der letzten Phase des axial orientierten Einsteckvorgangs, mit dem der Einsatz in das Gehäuse eingesetzt wird, an der Dichtfläche zur Anlage kommt. Somit können Scherkräfte zwischen Dichtung und Dichtfläche während der Montage und der Demontage reduziert werden. Die Gefahr einer Beschädigung der Dichtung kann dadurch verringert werden.

Die vorstehend genannte, zwischen dem einen Gehäuseanschluss und dem Einsatz bzw. dem einen Einsatzanschluss angeordnete Dichtung kann als Lippendichtung konzipiert sein und/oder kann an den Einsatz bzw. an den Radialstutzen angespritzt sein.

Bei einer anderen Ausführungsform kann der andere Einsatzanschluss einen Axialstutzen aufweisen, der sich durch eine offene Endscheibe des Filterelements hindurch in den Filterinnenraum erstreckt. Mit Hilfe eines derartigen Axialstutzens ergibt sich bei einfacher Montierbarkeit eine zuverlässige fluidische Kopplung zwischen Filterinnenraum und Einsatzinnenraum. Beispielsweise kann ein derartiger Axialstutzen besonders einfach radial gegenüber der jeweiligen Endscheibe des Filterelements abgedichtet werden, beispielsweise mittels eines O-Rings.

Gemäß einer anderen vorteilhaften Ausführungsform kann das Gehäuse einen axialen Bodenabschnitt aufweisen, der einen axial abstehenden Bodenstutzen aufweist, der sich durch eine offene Endscheibe des Filterelements hindurch in den Filterinnenraum erstreckt und der mit dem Filterinnenraum fluidisch verbunden ist. Mit Hilfe eines derartigen Bodenstutzens kann das Filterelement besonders einfach im Gehäuse positioniert werden. Ferner ist es über einen derartigen Bodenstutzen einfach möglich, eine zusätzliche fluidische Verbindung zum Filterinnenraum zu schaffen, die über den Bodenstutzen aus dem Gehäuse herausgeführt werden kann.

Vorteilhaft ist hierbei eine Ausführungsform, bei der eine axiale Haltekraft, die zwischen dem Bodenstutzen und dem Filterelement wirkt, kleiner ist als eine axiale Haltekraft, die zwischen dem Axialstutzen des Einsatzes und dem Filterelement wirkt. Diese Bauweise hat zur Folge, dass beim Herausziehen des Einsatzes aus dem Gehäuse gleichzeitig das Filterelement vom Bodenstutzen abgezogen werden kann, so dass zum Entfernen des Einsatzes und des Filterelements nur ein Handgriff erforderlich ist.

Bei einer anderen vorteilhaften Ausführungsform kann das Gehäuse, insbesondere im zuvor genannten Bodenabschnitt, ein Unterdrucköffnungsventil aufweisen, das fluidisch zwischen der Reinseite und einer Umgebung des Gehäuses angeordnet ist und ab einem vorbestimmten reinseitigen Unterdruck öffnet. Mit Hilfe eines derartigen Unterdrucköffnungsventils kann im Falle einer Fehlfunktion eine Beschädigung der Filtereinrichtung, insbesondere des Filterelements, vermieden werden.

Des Weiteren kann ein Federelement vorgesehen sein, das zwischen dem Einsatz und dem Filterelement angeordnet ist. Ein derartiges Federelement ist nur dann zweckmäßig, wenn es sich beim Einsatz und dem Filterelement um separate Bauteile handelt. Das Federelement kann ringförmig ausgestaltet sein und den Axialstutzen des Einsatzes koaxial umschließen. Zusätzlich oder alternativ kann das Federelement den Einsatz axial am Filterelement, insbesondere an einer Endscheibe, abstützen. Zusätzlich oder alternativ kann das Federelement konisch ausgestaltet sein, wobei es sich insbesondere in Richtung zum Einsatz verjüngt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine Seitenansicht einer Filtereinrichtung,
- Fig. 2: einen Längsschnitt der Filtereinrichtung entsprechend Schnittlinien II in Fig. 1,
- Fig. 3: einen Querschnitt der Filtereinrichtung entsprechend Schnittlinien III in Fig. 1,
- Fig. 4: einen verkürzten Längsschnitt der Filtereinrichtung entsprechend Schnittlinien IV in Fig. 1,
- Fig. 5: einen Längsschnitt eines Einsatzes der Filtereinrichtung in einer anderen Schnittebene als in den Fig. 2 und 4,
- Fig. 6 bis: 8 jeweils einen Längsschnitt der Filtereinrichtung einer anderen Ausführungsform, bei verschiedenen Betriebszuständen.

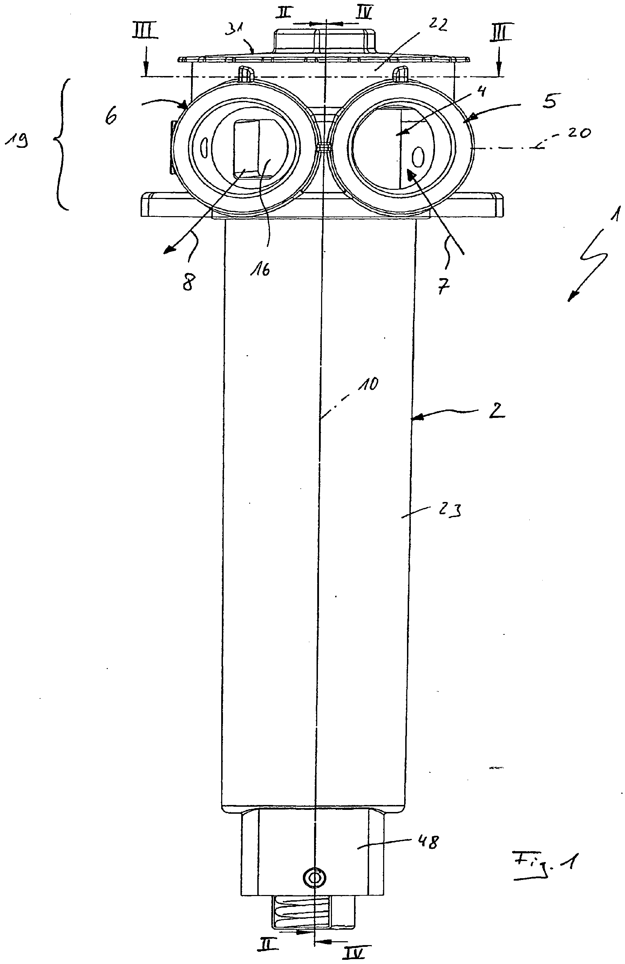

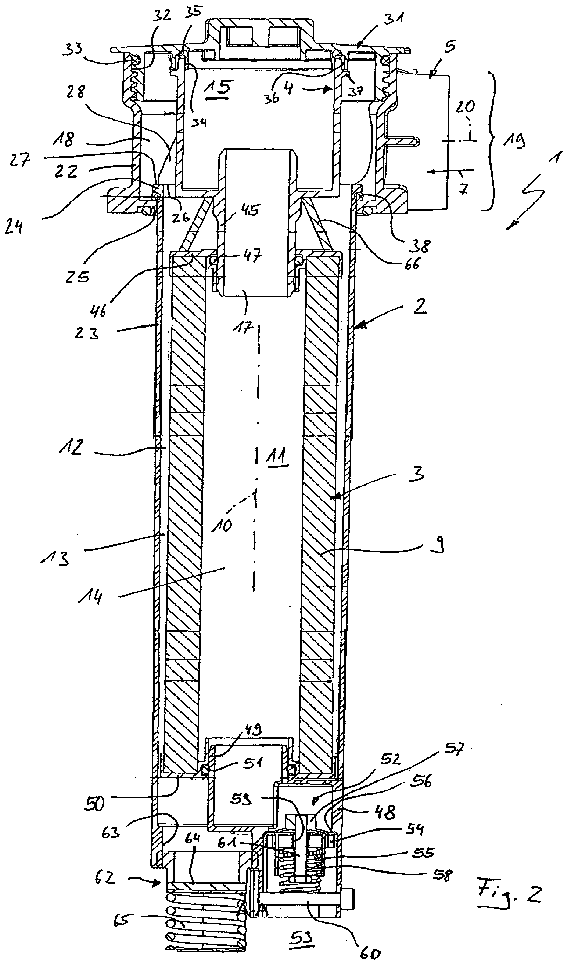

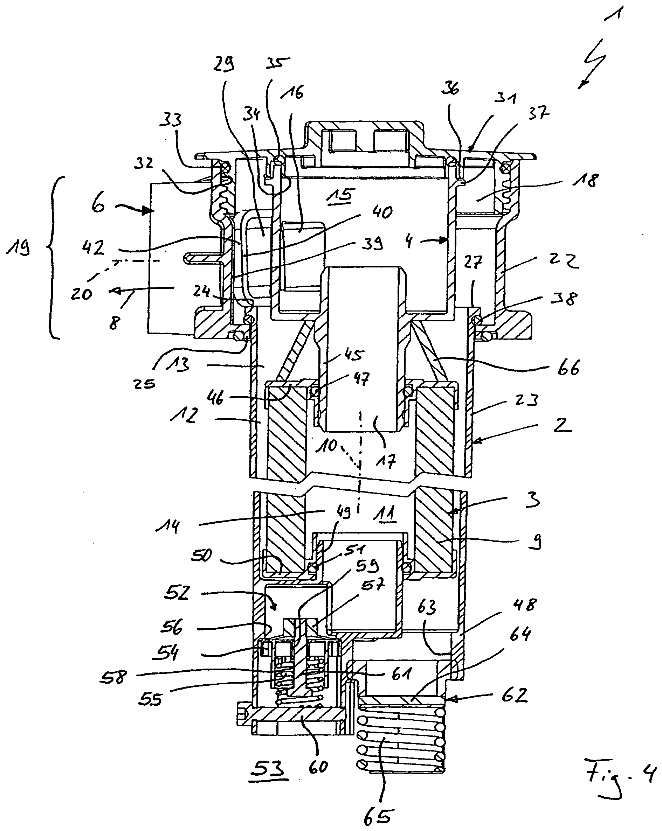

Entsprechend den Fig. 1 bis 8 umfasst eine Filtereinrichtung 1, bei der es sich vorzugsweise um ein Hydraulikfilter bzw. Flüssigkeitsfilter handelt, ein Gehäuse 2, zumindest ein im Gehäuse 2 angeordnetes Filterelement 3 und einen ebenfalls im Gehäuse 2 angeordneten Einsatz 4.

Das Gehäuse 2 weist zwei Gehäuseanschlüsse 5, 6 auf, nämlich einen ersten Gehäuseanschluss 5 und einen zweiten Gehäuseanschluss 6. Einer dieser Gehäuseanschlüsse 5, 6, hier der erste Gehäuseanschluss 5, bildet einen rohseitigen Einlass 7, während der andere Gehäuseanschluss 5, 6, hier der zweite Gehäuseanschluss 6, einen reinseitigen Auslass 8 bildet.

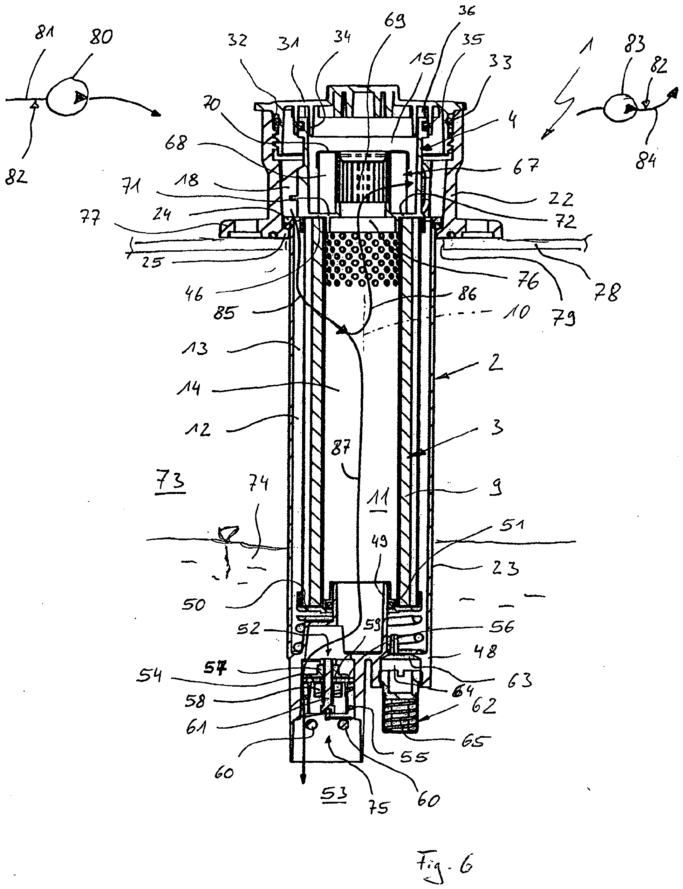

Bei der hier mit Bezug auf die Fig. 1 bis 5 vorgestellten Ausführungsform ist nur ein einziges Filterelement 3 vorgesehen. Grundsätzlich ist jedoch denkbar, im Gehäuse 2 zwei oder mehr Filterelemente 3 anzuordnen. Dementsprechend zeigen die Fig. 6 bis 8 eine Ausführungsform mit z.B. zwei Filterelementen, nämlich das Filterelement 3 und ein Zusatzfilterelement 67.

Das Filterelement 3 besitzt einen Filterkörper 9, der sich bezüglich einer Längsmittelachse 10 des Gehäuses 2 vorzugsweise ringförmig oder zylindrisch erstreckt. Jedenfalls umschließt der Filterkörper 9 einen Filterinnenraum 11 in der Umfangsrichtung, die sich auf die Längsmittelachse 10 bezieht. Radial zwischen dem Filterkörper 9 und dem Gehäuse 2 ist ein Filteraußenraum 12 ausgebildet, der den Filterkörper 9 in der Umfangsrichtung umschließt und der seinerseits vom Gehäuse 2 in der Umfangsrichtung umschlossen ist. Das Filterelement 3 trennt im Gehäuse 2 eine Rohseite 13 von einer Reinseite 14. Einer der vorgenannten Räume 11, 12, hier der Filterinnenraum 11, gehört zur Reinseite 14, während der andere Raum, hier der Filteraußenraum 12, zur Rohseite 13 gehört. Dementsprechend ist der Filterkörper 9 des Filterelements 3 bei der hier gezeigten Ausführungsform im Betrieb der Filtereinrichtung 1 radial von außen nach innen durchströmt. Grundsätzlich ist auch eine andere Ausführungsform denkbar, bei der der Filterkörper 9 radial von innen nach außen durchströmt ist. In diesem Fall bildet dann der erste Gehäuseanschluss 5 den Auslass 8, während der zweite Gehäuseanschluss 6 dann den Einlass 7 bildet.

Der Einsatz 4 ist so ausgestaltet, dass er den einen Gehäuseanschluss 5, 6, hier den zweiten Gehäuseanschluss 6, also den Auslass 8 fluidisch mit dem Filterinnenraum 11 verbindet. Mit anderen Worten, durch den Einsatz 4 hindurch ist der Filterinnenraum 11 mit dem einen Gehäuseanschluss 5, 6, hier mit dem den Auslass 8 bildenden zweiten Gehäuseanschluss 6 fluidisch verbunden. Zweckmäßig ist der Einsatz 4 so ausgestaltet, dass er einen Einsatzinnenraum 15 in der Umfangsrichtung umschließt und zwei Einsatzanschlüsse 16, 17, nämlich einen ersten Einsatzanschluss 16 und einen zweiten Einsatzanschluss 17 aufweist. Beide Einsatzanschlüsse 16, 17 sind mit dem Einsatzinnenraum 15 fluidisch verbunden. Ferner ist der Einsatz 4 hier so konfiguriert, dass zwischen dem Einsatz 4 und dem Gehäuse 2 ein Einsatzaußenraum 18 ausgebildet ist, der den Einsatz 4 in der Umfangsrichtung umschließt und der seinerseits vom Gehäuse 2 in der Umfangsrichtung umschlossen ist. Der eine Einsatzanschluss 16, 17, hier der erste Einsatzanschluss 16, ist mit dem einen Gehäuseanschluss 5, 6, hier mit dem zweiten Gehäuseanschluss 6, also mit dem Auslass 8 fluidisch verbunden, so dass über den ersten Einsatzanschluss 16 der zweite Gehäuseanschluss 6, also der Auslass 8 mit dem Einsatzinnenraum 15 fluidisch verbunden ist. Der andere Einsatzanschluss 16, 17, also hier der zweite Einsatzanschluss 17 ist mit dem Filterinnenraum 11 fluidisch verbunden, so dass letztlich über den zweiten Einsatzanschluss 17 der Filterinnenraum 11 mit dem Einsatzinnenraum 15 fluidisch verbunden ist. Somit bewirkt der Einsatz 4 die gewünschte fluidische Kopplung zwischen dem den Auslass 8 bildenden zweiten Gehäuseanschluss 6 und dem Filterinnenraum 11.

Der erste Gehäuseanschluss 5, also der Einlass 7 ist dagegen fluidisch mit dem Einsatzaußenraum 18 verbunden, der seinerseits fluidisch mit dem Filteraußenraum 12 verbunden ist, so dass letztlich der erste Gehäuseausschluss 5 mit dem Filteraußenraum 12 kommuniziert. Hierzu geht der Einsatzaußenraum 18 innerhalb des Gehäuses 2 in den Filteraußenraum 12 über.

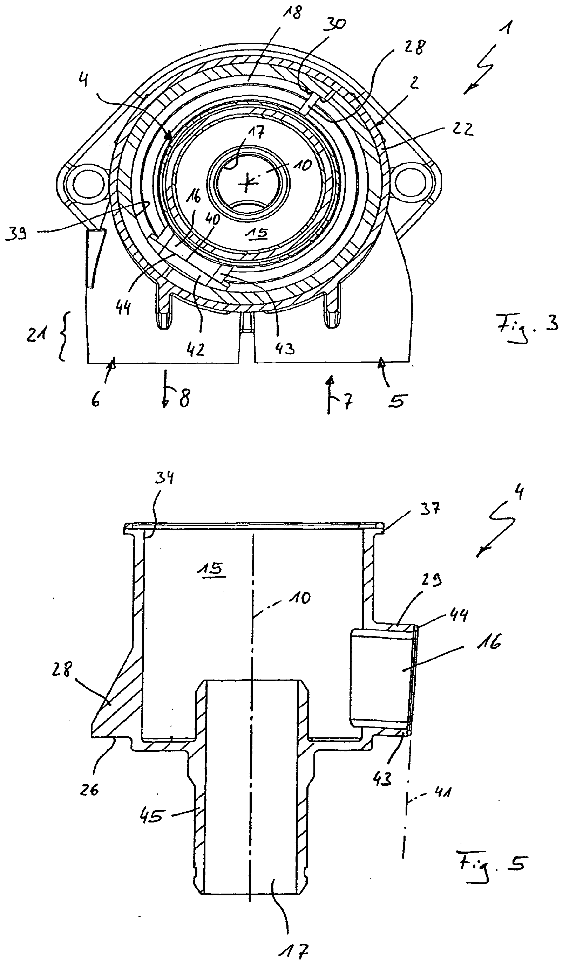

Zweckmäßig sind beide Gehäuseanschlüsse 5, 6 auf der gleichen Seite des Gehäuses 2 angeordnet, so dass sie in Fig. 1 jeweils dem Betrachter zugewandt sind. Darüber hinaus befinden sich die beiden Gehäuseanschlüsse 5, 6 am Gehäuse 2 innerhalb desselben Axialabschnitts 19, der durch eine geschweifte Klammer angedeutet ist. Darüber hinaus können die beiden Anschlüsse 5, 6 mit ihren Längsmittelachsen in derselben Axialebene 20 angeordnet sein. Erkennbar liegen die beiden Gehäuseanschlüsse 5, 6 im Beispiel am Gehäuse 2 in der Umfangsrichtung nebeneinander. Ferner verdeutlicht Fig. 3, dass die beiden Anschlüsse 5, 6 zumindest in einem vom Gehäuse 2 abgewandten, in Fig. 3 durch eine geschweifte Klammer angedeuteten Außenabschnitt 21 parallel zueinander verlaufen können.

Bei der hier vorgestellten Ausführungsform besitzt das Gehäuse 2 einen Anschlussabschnitt 22, an dem die beiden Gehäuseanschlüsse 5, 6 ausgebildet sind, sowie einen Aufnahmeabschnitt 23, in dem das Filterelement 3 angeordnet ist. Ferner ist der Einsatz 4 im Wesentlichen innerhalb des Anschlussabschnitts 22 angeordnet und erstreckt sich zumindest oder ausschließlich mit seinem zweiten Einsatzanschluss 17 bis in den Aufnahmeabschnitt 23 hinein. Insoweit umschließ der Anschlussabschnitt 22 den Einsatz 4 und insbesondere den Einsatzaußenraum 18 in Umfangsrichtung. Der Aufnahmeabschnitt 23 umschließt das Filterelement 3 und somit auch den Filteraußenraum 12 in Umfangsrichtung. Im gezeigten bevorzugten Beispiel bilden der Anschlussabschnitt 22 und der Aufnahmeabschnitt 23 separate Bauteile, so dass das Gehäuse 2 gebaut ist.

Für die Montage der beiden Gehäuseabschnitte 22, 23 aneinander kann der Aufnahmeabschnitt 23 einen Außenkragen 24 aufweisen, der in Umfangsrichtung umläuft und radial nach außen absteht. Komplementär dazu besitzt der Anschlussabschnitt 22 einen Innenkragen 25, der in der Umfangsrichtung umläuft und radial nach innen absteht. Die beiden Kragen 24, 25 sind so aufeinander abgestimmt, dass sie sich in radialer Richtung gegenseitig überlappen. Somit kann der Aufnahmeabschnitt 23 über den Außenkragen 24 axial über den Innenkragen 25 am Anschlussabschnitt 22 abgestützt werden.

Der Einsatz 4 besitzt zweckmäßig zumindest einen an seiner Außenseite angeordneten Axialanschlag 26. Dieser stützt sich im montierten Zustand axial an einem Gegenanschlag 27 ab, der hierzu am Gehäuse 2 ausgebildet ist. Im Beispiel ist der Gegenanschlag 27 am Aufnahmeabschnitt 23 des Gehäuses 2 ausgebildet, und zwar bevorzugt am Außenkragen 24 bzw. an der entsprechenden axialen Stirnseite des Aufnahmeabschnitts 23. Im Beispiel ist nur ein einziger Axialanschlag 26 vorgesehen. Dieser Axialanschlag 26 ist durch ein Anschlagelement 28 ausgebildet, das am Einsatz 4 angebracht ist, insbesondere daran integral ausgeformt ist. Optional kann ein solcher Axialanschlag 26 auch durch einen Radialstutzen 29 gebildet sein. Der erste Einsatzanschluss 16 weist einen solchen Radialstutzen 29 auf, um die fluidische Kopplung mit dem zweiten Gehäuseanschluss 6 zu realisieren. Hierzu erstreckt sich dieser Radialstutzen 29 durch den Einsatzaußenraum 18 hindurch bis zum zweiten Gehäuseanschluss 6. Wie den Figuren 3 und 5 zu entnehmen ist, sind das Anschlagelement 28 und der Radialstutzen 29 am Einsatz 4 zueinander diametral gegenüberliegend angeordnet, unabhängig davon, ob der Radialstutzen 29 nun einen solchen Axialanschlag 26 bildet oder - wie hier - nicht.

Bei der in den Fig. 1 bis 5 gezeigten Ausführungsform ist der Axialanschlag 26 nur in Form des Anschlagelements 28 verwirklicht. Der Radialstutzen 29 ist hier axial vom Gegenanschlag 27 beabstandet, wodurch es insbesondere möglich ist, dass der Einsatz 4 geringfügig gegenüber dem Gehäuse 2 verkippen kann. Dies kann gezielt zum Verbessern der fluidischen Verbindung zwischen Einsatz 4 und zweitem Gehäuseanschluss 6 genutzt werden, was weiter unten noch näher erläutert wird.

Gemäß Fig. 3 kann das Anschlagelement 28 in einer Axialführung 30 axial geführt und gegen eine Verdrehung relativ zum Gehäuse 2 gesichert sein. Eine derartige Axialführung 30 kann optional am Gehäuse 2, insbesondere am Anschlussabschnitt 22 ausgebildet sein, insbesondere integral daran ausgeformt sein. Durch das Zusammenwirken zwischen Anschlagelement 28 und Axialführung 30 kann eine vorgegebene Drehlage zwischen Einsatz 4 und Gehäuse 2 besonders einfach eingehalten werden, um eine dichte Kopplung zwischen Einsatz 4 und zweitem Gehäuseanschluss 6 zu realisieren.

Bei der hier gezeigten Ausführungsform drückt der Einsatz 4 über den Axialanschlag 26 und über den am Aufnahmeabschnitt 23 ausgebildeten Gegenanschlag 27 den Aufnahmeabschnitt 23 axial gegen den Anschlussabschnitt 22 an. Insbesondere drückt der Einsatz 4 dabei den Außenkragen 24 axial gegen den Innenkragen 25.

In den gezeigten Beispielen der Fig. 1 bis 8 weist das Gehäuse 2 außerdem einen Deckel 31 auf, der eine axiale Wartungsöffnung 32 des Gehäuses 2 verschließt. Diese Wartungsöffnung 32 ist hier am Anschlussabschnitt 22 ausgebildet. Der Deckel 31 ist mit dem Gehäuse 2, hier mit dem Anschlussabschnitt 22, verschraubt. Ferner ist der Deckel 31 zweckmäßig mittels einer Dichtung 33, z. B. ein O-Ring, gegenüber dem Gehäuse 2, hier gegenüber dem Anschlussabschnitt 22 abgedichtet. Die Montageöffnung 32 ist so groß dimensioniert, dass durch sie hindurch das Filterelement 3 und der Einsatz 4 in das Gehäuse 2 einsetzbar sind. Ferner ist die Wartungsöffnung 32 hier so groß gestaltet, dass durch sie hindurch außerdem der Aufnahmeabschnitt 23 in den Anschlussabschnitt 22 einsteckbar bzw. durch diesen hindurchsteckbar ist. Der Deckel 31 verschließt hier außerdem eine axial offene Seite 34 des Einsatzes 4, die vom Filterelement 3 abgewandt ist. Optional kann auch hier eine Dichtung 35 vorgesehen sein, z. B. ein O-Ring, um den Deckel 31 gegenüber dem Einsatz 4 abzudichten. Der Deckel 31 kann hierzu eine axiale Aufnahmenut 36 aufweisen, in die der Einsatz 4 im Bereich seiner offenen Seite 34 axial eintaucht. In dieser Axialnut 36 kann auch die Dichtung 35 angeordnet sein. Der Einsatz 4 kann den umlaufenden Bund 37 aufweisen, um die Einstecktiefe in die Axialnut 36 auf ein vorbestimmtes Maß zu begrenzen.

Im montierten Zustand drückt der Deckel 31 den Einsatz 4 über den wenigstens einen Axialanschlag 26 axial gegen das Gehäuse 2. Beim gebauten Gehäuse 2 wird dabei gleichzeitig der Aufnahmeabschnitt 23 am Anschlussabschnitt 22 festgelegt. Zwischen dem Außenkragen 24 und dem Innenkragen 25 kann eine Dichtung 38 angeordnet sein, z. B. ein O-Ring, um die beiden Gehäuseabschnitte 22, 23 gegeneinander abzudichten.

Wie bereits erläutert, kann der erste Einsatzanschluss 16 einen Radialstutzen 29 aufweisen, der sich vom Einsatz 4 durch den Einsatzaußenraum 18 bis zum zweiten Gehäuseanschluss 6 erstreckt. An einer dem Einsatz 4 zugewandten Innenseite 39 des Gehäuses 2 kann der zweite Gehäuseanschluss 6 eine Dichtfläche 40 aufweisen, die in einer in Fig. 5 angedeuteten Dichtebene 41 liegt. Diese Dichtfläche 40 umschließt den zweiten Gehäuseanschluss 6 an der Gehäuseinnenseite 39. Im Beispiel ist die Dichtfläche 40 an einer Konsole 42 ausgebildet, die an der Gehäuseinnenseite 39 den zweiten Gehäuseanschluss 6 umfassend ausgebildet ist.

Der Radialstutzen 29 besitzt nun an seinem vom Einsatz 4 abgewandten Ende 43 eine Dichtung 44, die komplementär zur Dichtfläche 40 geformt bzw. positioniert ist, so dass sie im montierten Zustand dichtend an der Dichtfläche 40 zur Anlage kommt. Im montierten Zustand liegt die Dichtung 44 somit ebenfalls in der Dichtebene 41. Die Dichtung 44 umschließt den ersten Einsatzanschluss 16 am Ende 43 des Radialstutzens 29. Die Dichtung 44 ist zweckmäßig an den Radialstutzen 29 bzw. an dessen stirnseitiges Ende 43 angespritzt.

Im gezeigten Beispiel ist die Dichtebene 41 gegenüber der Längsmittelachse 10 geneigt. Beim Einstecken des Einsatzes 4 in das Gehäuse 2 kommt daher ein körperlicher Kontakt zwischen der Dichtung 44 und der Dichtfläche 40 erst in der letzten Phase der Einsteckbewegung zustande, so dass kaum Relativbewegung zwischen Dichtung 44 und Dichtfläche 40 stattfindet, was die Gefahr einer Beschädigung der Dichtung 44 signifikant reduziert. Das Anschlagelement 28 stützt sich diametral gegenüber des Radialstutzens 29 am Gehäuse 2 radial ab und führt dadurch zu einer Anpressung der Dichtung 44 gegen die Dichtfläche 40, die von der Axialkraft abhängt, die den Einsatz 4 in das Gehäuse 2 hineindrückt. Der am Anschlagelement 28 ausgebildete Axialanschlag 26 führt bei hohen axialen Andruckkräften am Einsatz 4 zu einem Kippen des Einsatzes 4 in Richtung der Dichtfläche 40, wodurch die Anpressung zwischen Dichtung 44 und Dichtfläche 40 verbessert wird.

Der zweite Einsatzanschluss 17 weist einen Axialstutzen 45 auf, der sich im montierten Zustand durch eine offene Endscheibe 46 des Filterelements 3 hindurch in den Filterinnenraum 11 erstreckt. Zwischen dem Axialstutzen 45 und der zugehörigen Endscheibe 46 kann eine Dichtung 47 vorgesehen sein, z. B. ein O-Ring. Insbesondere kann in Verbindung mit dieser Dichtung 47 eine axiale Haltekraft realisiert werden, die zwischen dem Axialstutzen 45 und der zugehörigen Endscheibe, also letztlich zwischen dem Einsatz 4 und dem Filterelement 3 wirkt.

Das Gehäuse 2 besitzt im gezeigten Beispiel an einem vom Einsatz 4 entfernten Ende einen axialen Bodenabschnitt 48, der im Beispiel integral am Aufnahmeabschnitt 23 ausgeformt ist. Dieser Bodenabschnitt 48 weist einen axial abstehenden Bodenstutzen 49 auf, der sich durch eine offene Endscheibe 50 des Filterelements 3 in den Filterinnenraum 11 erstreckt. Auch hier kann zwischen dem Bodenstutzen 49 und der zugehörigen Endscheibe 50 eine Dichtung 51 vorgesehen sein, z. B. ein O-Ring. Ferner kann zwischen dem Bodenstutzen 49 und der zugehörigen Endscheibe 50, insbesondere mit Hilfe der Dichtung 51, eine axiale Haltekraft realisiert werden, die letztlich zwischen dem Gehäuse 2 und dem Filterelement 3 wirkt. Besonders vorteilhaft ist es, die zwischen dem Einsatz 4 und dem Filterelement 3 wirkende Haltekraft größer auszulegen als die zwischen dem Filterelement 3 und dem Gehäuse 2 wirkende Haltekraft. So ist es besonders einfach möglich, den Filterkörper 3 zusammen mit dem Einsatz 4 aus dem Gehäuse 2 herauszuziehen.

Das Gehäuse 2 ist bei der hier gezeigten Ausführungsform außerdem mit einem Unterdrucköffnungsventil 52 ausgestattet, das zweckmäßig im Bodenabschnitt 48 angeordnet ist. Das Unterdrucköffnungsventil 52 ist dabei zwischen der Reinseite 14 und einer Umgebung 53 des Gehäuses 2 angeordnet, die sich insbesondere in einem Tank 73 befinden kann, in dem ein Fluid 74 bevorratet wird, das in einem Fluidkreis 82 zirkuliert, in den die Filtereinrichtung 1 eingebunden ist. Das Unterdrucköffnungsventil 52 öffnet ab einem vorbestimmten reinseitigen Unterdruck. Im Einzelnen kann das Unterdrucköffnungsventil 52 ein Ventilglied 57 aufweisen, das mit einer Vorspannfeder 58 an einem Träger 54 abgestützt und in eine Schließstellung vorgespannt ist. In dieser Schließstellung verschließt das Ventilglied 57 eine Trägeröffnung 59, die am Träger 54 ausgebildet ist. Durch die Trägeröffnung 59 kommuniziert die Umgebung 53 bzw. der Tank 73 über den Bodenstutzen 49 mit dem Filterinnenraum 11 und somit mit der Reinseite 14.

Ferner kann ein erstes Überdrucköffnungsventil 75 vorgesehen sein, das zweckmäßig ebenfalls im Bodenabschnitt 48 angeordnet sein kann. Das erste Überdrucköffnungsventil 75 ist dabei zwischen der Reinseite 14 und der Umgebung 53 bzw. dem Tank 73 angeordnet. Das erste Überdrucköffnungsventil 75 öffnet ab einem vorbestimmten reinseitigen Überdruck. Im Einzelnen kann das erste Überdrucköffnungsventil 75 ein Ventilglied 54 aufweisen, das mit einer Vorspannfeder 55 am Gehäuse 2 abgestützt und in eine Schließstellung vorgespannt ist. In dieser Schließstellung verschließt das Ventilglied 54 eine Gehäuseöffnung 56, die am Gehäuse 2 ausgebildet ist. Durch die Gehäuseöffnung 56 kommuniziert die Umgebung 53 bzw. der Tank 73 über den Bodenstutzen 49 mit dem Filterinnenraum 11 und somit mit der Reinseite 16.
Die Vorspannfeder 55 des ersten Überdrucköffnungsventils 75 ist über wenigstens eine am Gehäuse 2 festgelegte Schraube 60 am Gehäuse 2 abgestützt. Die Vorspannfeder 58 des Unterdrucköffnungsventils 52 ist über eine am Ventilglied 57 festgelegte Schraube 61 am Ventilglied 57 abgestützt. Anstelle von Schrauben 60, 61 können zur Abstützung auch Nieten oer sonstige geeignete Stützstellen verwendet werden.

Im gezeigten bevorzugten Beispiel ist das erste Überdrucköffnungsventil 75 in das Unterdrucköffnungsventil 52 integriert. Zweckmäßig billdet dabei das Ventilglied 54 des ersten Überdrucköffnungsventils 75 den Träger 54 für das Ventilglied 57 des Unterdrucköffnungsventils 52 und enthält demensprechend die Trägeröffnung 59 und dient zur Abstützung der Vorspannfeder 58 des Ventilglieds 57 des Unterdrucköffnungsventils 52. Die ineinander integrierten Ventile 52, 75 bilden dabei eine Einheit, die vormontiert in das Gehäuse 2 eingesetzt werden kann.

Im Beispiel weist die Filtereinrichtung 1 außerdem ein zweites Überdrucköffnungsventil 62 auf, das als Einheit in das Gehäuse 2 eingebaut, insbesondere eingeschraubt sein kann. Das Überdrucköffnungsventil 62 steuert dabei eine weitere Gehäuseöffnung 63, über welche die Umgebung 53 bzw. der Tank 73 mit der Rohseite 13 kommuniziert. Ein Ventilglied 64, zum Beispiel in Form einer Platte, ist mit einer Vorspannfeder 65 in eine Schließstellung vorgespannt. Das zweite Überdrucköffnungsventil 62 öffnet ab einem vorbestimmten rohseitigen Überdruck.

Zweckmäßig sind die beiden Überdrucköffnungsventile 75 und 62 so aufeinander abgestimmt, dass der vorbestimmte rohseitige Überdruck, ab dem das zweite Überdrucköffnungsventil 62 öffnet, größer ist als der vorbestimmte reinseitige Überdruck, ab dem das erste Überdrucköffnungsventil 75 öffnet.
Im Beispiel der Fig. 1 bis 5 weist die Filtereinrichtung 1 außerdem ein Federelement 66 auf, das im Bereich der zweiten Einsatzöffnung 17 zwischen dem Einsatz 4 und dem Filterelement 3 angeordnet ist. Im Beispiel ist das Federelement 66 ringförmig ausgestaltet und koaxial zum Axialstutzen 45 angeordnet. Ferner stützt sich der Einsatz 4 axial über das Federelement 66 am Filterkörper 3 ab. Darüber hinaus ist das Federelement 66 hier konisch ausgestaltet, und zwar derart, dass es sich in Richtung Filterelement 3 aufweitet.

Bei der in den Fig. 6 bis 8 gezeigten Ausführungsform ist der Einsatz 4 integral am Filterelement 3 ausgeformt. Im Einzelnen ist der Einsatz 4 dabei an der dem Deckel 31 zugewandten Endscheibe 46 des Filterelements 3 integral ausgeformt.

Bei der in den Fig. 6 bis 8 gezeigten Ausführungsform ist außerdem ein Zusatzfilterelement 67 vorgesehen, das hinsichtlich der Durchströmung der Filtereinrichtung 1 zwischen dem Filterinnenraum 11 und dem Einsatzinnenraum 15 angeordnet ist. Insbesondere ist das Zusatzfilterelement 67 hierzu im Einsatzinnenraum 15 angeordnet. Im Beispiel ist das Zusatzfilterelement 67 ebenfalls als Ringfilterelement ausgestaltet und weist einen Filterkörper 68 auf, der sich zylindrisch bzw. ringförmig erstreckt. Der Filterkörper 68 umschließt dabei innerhalb des Einsatzinnenraums 15 einen Zusatzfilterinnenraum 69, in der Umfangsrichtung, wobei dieser Zusatzfilterinnenraum 69 mit dem Filterinnenraum 11 fluidisch verbunden ist. Zweckmäßig ist das Zusatzfilterelement 67 hierzu an einer zentralen Durchgangsöffnung 76 der dem Deckel 31 zugewandten Endscheibe 46 des Filterelements 3 angeordnet. Ferner besitzt auch das Zusatzfilterelement 67 zweckmäßig zwei Endscheiben 70, 71, wobei die dem Deckel 31 zugewandte Endscheibe 70 als geschlossene Endscheibe konfiguriert ist, während die andere Endscheibe 71 als zentral offene Endscheibe konfiguriert ist, so dass der Zusatzfilterinnenraum 69 durch die offenen Endscheibe 71 des Zusatzfilterelements 67 und/oder durch die offene Endscheibe 46 des Filterelements 3 mit dem Filterinnenraum 11 fluidisch verbunden ist.

Bei der in den Fig. 6 bis 8 gezeigten Ausführungsform ist der Einsatz 4 integral am Zusatzfilterelement 67 ausgeformt. Zweckmäßig ist dabei der Einsatz 4 an der vom Deckel 31 abgewandten Endscheibe 71 des Zusatzfilterelements 67 integral ausgeformt.

Zusätzlich ist bei der hier gezeigten Ausführungsform vorgesehen, dass das Zusatzfilterelement 67 integral am Filterelement 3 ausgeformt ist. Im Einzelnen wird hierzu vorgeschlagen, den Filterkörper 9 des Filterelements 3 und den Filterkörper 68 des Zusatzfilterelements 67 mittels einer gemeinsamen Endscheibe 72 axial zu begrenzen. In dieser gemeinsamen Endscheibe 72 sind die Endscheibe 46 des Filterelements 3 und die Endscheibe 71 des Zusatzfilterelements 67 vereint. Im bevorzugten Beispiel der Fig.6 bis 8 ist an dieser gemeinsamen Endscheibe 72 der Einsatz 4 integral ausgeformt.

Die Fig. 6 bis 8 zeigen außerdem eine bevorzugte Verwendung der Filtereinrichtung 1, bei welcher das Gehäuse 2 in einen Tank 73 hineinragt, so dass das Gehäuse 2 zumindest mit seinem Bodenabschnitt 48 in das Fluid 74 eintaucht. Beispielsweise kann am Gehäuse 2 insbesondere am Anschlussabschnitt 22 ein Flansch 77 vorgesehen sein, um das Gehäuse 2 an einer Wand 78 des Tanks 73 zu befestigen. Das Gehäuse 2 ragt dann mit seinem Aufnahmeabschnitt 23 durch eine Tanköffnung 79 in den Tank 73 hinein. An den in den Fig. 6 bis 8 nicht erkennbaren Einlass 7 ist eine erste oder druckseitige Fördereinrichtung 80 angeschlossen, die das Fluid 74 in einem Rücklauf 81 eines Fluidkreises 82 dem Einlass 7 zuführt. Der in den Fig. 6 bis 8 ebenfalls nicht erkennbare Auslass 8 ist an eine zweite oder saugseitige Fördereinrichtung 83 angeschlossen, die in einen Vorlauf 84 des Fluidkreises 82 eingebunden ist. Die saugseitige Fördereinrichtung 83 saugt am Auslass 8 das Fluid 74 an. In einem in Fig. 6 dargestellten Normalbetriebszustand fördert die druckseitige Fördereinrichtung 80 eine Einlassmenge dem Einlass 7 zu, die über den Einlass 7 zunächst in den Einsatzaußenraum 18 gelangt, von dort in den Filteraußenraum 12 gelangt und dann durch des Filterelement 3 in den Filterinnenraum 11 gelangt. Über die saugseitige Fördereinrichtung 83 wird eine Auslassmenge an Fluid angesaugt, die im gezeigten Beispiel kleiner ist als die einlassseitig zugeführte Einlassmenge. In der Folge kommt es im Filterinnenraum 11 zu einem Druckanstieg, der durch das erste Überdrucköffnungsventil 52 auf einen vorbestimmten reinseitigen Überdruck begrenzt ist. Die der Filtereinrichtung 1 zugeführte Einlassmenge ist in Fig. 6 durch einen Pfeil 85 angedeutet. Die über den Auslass 8 abgeführte Auslassmenge ist in Fig. 6 durch einen Pfeil 86 angedeutet. Die durch das erste Überdrucköffnungsventil 52 in den Tank 73 abgeführte Rücklaufmenge, die der Differenz zwischen Einlassmenge 85 und Auslassmenge 86 entspricht, ist in Fig. 6 durch einen Pfeil 87 angedeutet. Um zum Auslass 8 zu gelangen, muss die Auslassmenge 86 außerdem das Zusatzfilterelement 67 durchströmen.

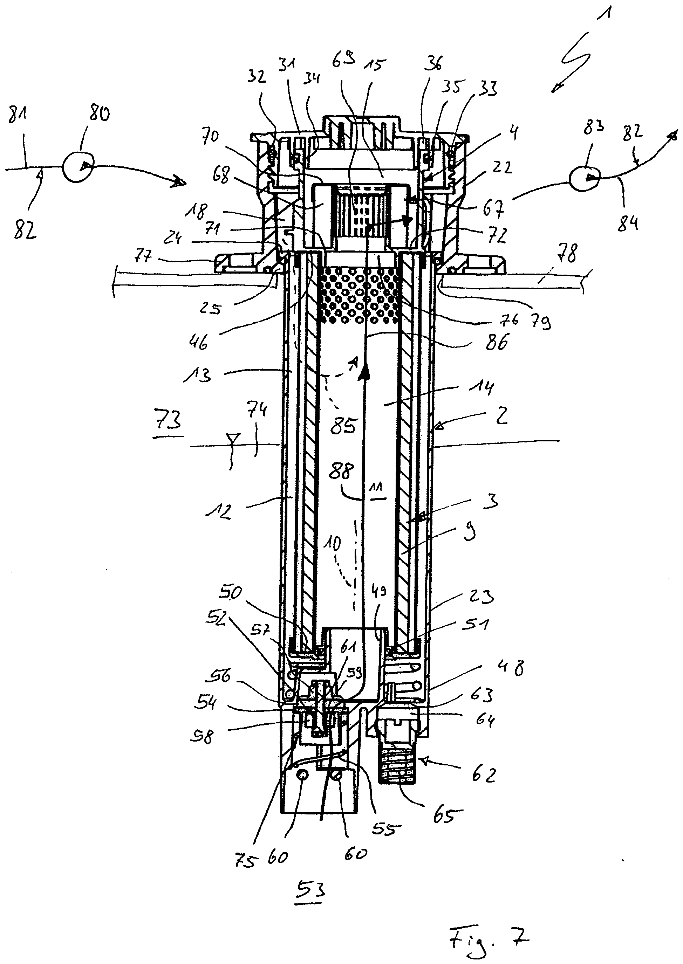

Im Zustand gemäß Fig. 7 ist die druckseitige Fördereinrichtung 80 ausgeschaltet. In der Folge kann die saugseitige Fördereinrichtung 83 Fluid 74 aus dem Tank 73 durch die Filtereinrichtung 1 ansaugen. Ab einem vorbestimmten vergleichsweise kleinen Unterdruck auf der Reinseite 14 öffnet das Unterdrucköffnungsventil 52 und gibt den in Fig. 7 durch einen Pfeil angedeuteten Saugpfad bzw. Saugstrom 88 frei. Das aus dem Tank 73 angesaugte Fluid 74 umgeht dabei das Filterelement 3, muss jedoch das Zusatzfilterelement 67 durchströmen, um zum Auslass 8 zu gelangen.

Sofern die druckseitige Fördereinrichtung 80 weniger Fluid zuführt als über die saugseitige Fördereinrichtung 83 abgeführt wird, ergibt sich zusätzlich wieder eine Einlassmenge 85, die in Fig. 7 durch einen mit unterbrochener Linie angedeuteten Pfeil angedeutet ist, die sich dann zusammen mit dem Saugstrom 88 zur Auslassmenge 86 addiert.

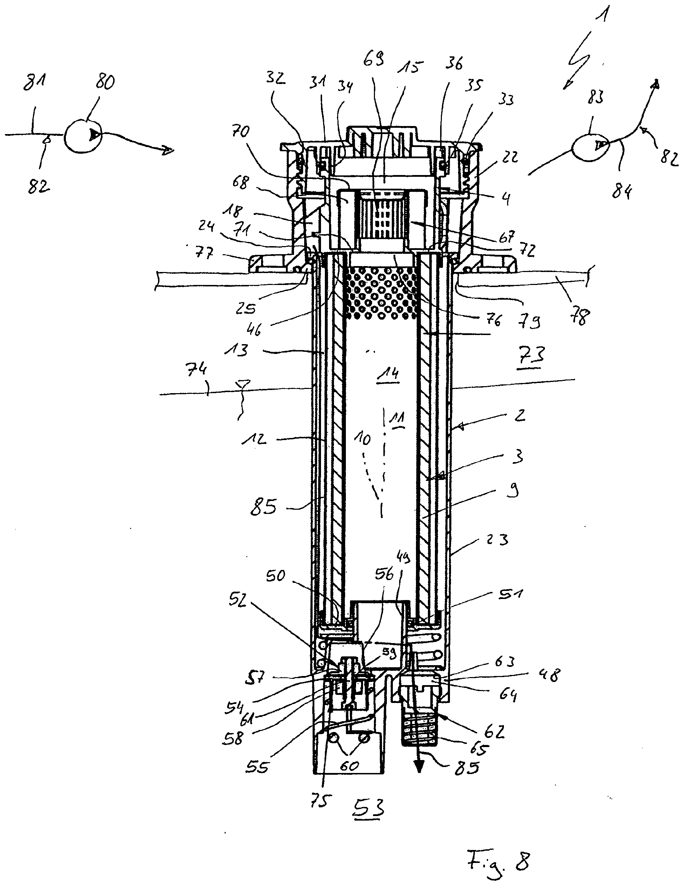

Fig. 8 zeigt einen Zustand, bei dem das Filterelement 3 soweit zugesetzt ist, dass eine Durchströmung rohseitig zu einem Druckanstieg führt, der durch das zweite Überdrucköffnungsventil 62 begrenzt ist. In der Folge fließt die Einlassmenge 85 nahezu vollständig in den Tank 73. Es ist klar, dass auch geringere Mengen des Fluids nach wie vor das Filterelement 3 durchdringen können. Sofern die saugseitige Fördereinrichtung 83 Fluid ansaugt, erfolgt dies wie in Fig. 7 über das Unterdrucköffnungsventil 52 direkt aus dem Tank 73, also wieder unter Umgehung des Filterelements 3, wobei auch hier das dem Auslass 8 zugeführte Fluid das Zusatzfilterelement 67 zwingend durchströmt.

## Patentansprüche

1. Filtereinrichtung, insbesondere Flüssigkeitsfilter,
- mit einem Gehäuse (2), das zwei Gehäuseanschlüsse (5, 6) aufweist, von denen der eine Gehäuseanschluss (6) einen reinseitigen Auslass (8) und der andere Gehäuseanschluss (5) einen rohseitigen Einlass (7) bildet,
- mit mindestens einem Filterelement (3), das in das Gehäuse (2) eingesetzt ist und das einen Filterkörper (9) aufweist, der einen Filterinnenraum (11) in Umfangsrichtung umschließt und von einem Filteraußenraum (12) in Umfangsrichtung umschlossen ist, der seinerseits vom Gehäuse (2) in Umfangsrichtung umschlossen ist, wobei der eine Raum (12) zu einer mit dem Einlass (7) fluidisch verbundenen Rohseite (13) und der andere Raum (11) zu einer mit dem Auslass (8) fluidisch verbundenen Reinseite (14) gehört,
- mit einem Einsatz (4), der in das Gehäuse (2) eingesetzt ist und den einen Gehäuseanschluss (6) mit dem Filterinnenraum (11) fluidisch verbindet,
- wobei im Gehäuse (2) ein Zusatzfilterelement (67) angeordnet ist,
**dadurch gekennzeichnet,**
- **dass** der Einsatz (4) einen Einsatzinnenraum (15) umschließt und von einem Einsatzaußenraum (18) umschlossen ist,
- **dass** der Einsatzaußenraum (18) vom Gehäuse (2) umschlossen ist,
- **dass** der eine Gehäuseanschluss (6) mit dem Einsatzinnenraum (15) fluidisch verbunden ist, während der andere Gehäuseanschluss (5) mit dem Einsatzaußenraum (18) fluidisch verbunden ist,
- **dass** die beiden Gehäuseanschlüsse (5, 6) in demselben Axialabschnitt des Gehäuses (2) und an derselben Seite des Gehäuses (2) angeordnet sind,
- **dass** das Zusatzfilterelement (67) fluidisch zwischen dem Filterinnenraum (11) und dem Einsatzinnenraum (15) angeordnet ist.

2. Filtereinrichtung nach Anspruch 1,
**dadurch gekennzeichnet,**
**dass** der Einsatz (4) integral am Filterelement (3) ausgeformt ist.

3. Filtereinrichtung nach Anspruch 2,
**dadurch gekennzeichnet,**
**dass** das Filterelement (3) zwei den Filterkörper (9) axial begrenzende Endscheiben (46, 50) aufweist, wobei der Einsatz (4) an einer der Endscheiben (46) integral ausgeformt ist.

4. Filtereinrichtung nach einem der Ansprüche 1 bis 3,
**dadurch gekennzeichnet,**
**dass** das Zusatzfilterelement (67) im Einsatzinnenraum (15) angeordnet ist.

5. Filtereinrichtung nach Anspruch 4,
**dadurch gekennzeichnet,**
**dass** ein Filterkörper (68) des Zusatzfilterelements (67) im Einsatzinnenraum (15) einen mit dem Filterinnenraum (11) fluidisch verbundenen Zusatzfilterinnenraum (69) in Umfangsrichtung umschließt, wobei insbesondere vorgesehen sein kann, dass der Filterkörper (68) des Zusatzfilterelements (67) an einer vom Filterinnenraum (11) abgewandten Axialseite mit einer Endscheibe (70) begrenzt ist, die auch den Zusatzfilterinnenraum (69) axial begrenzt.

6. Filtereinrichtung nach einem der Ansprüche 1 bis 5,
**dadurch gekennzeichnet,**
**dass** der Einsatz (4) integral am Zusatzfilterelement (67) ausgeformt ist, wobei insbesondere vorgesehen sein kann, dass das Zusatzfilterelement (67) zwei Endscheiben (70, 71) aufweist, die einen Filterkörper (68) des Zusatzfilterelements (67) axial begrenzen, wobei der Einsatz (4) an einer der Endscheiben (71) integral ausgeformt ist.

7. Filtereinrichtung nach einem der Ansprüche 1 bis 6,
**dadurch gekennzeichnet,**
**dass** das Zusatzfilterelement (67) integral am Filterelement (3) ausgeformt ist, wobei insbesondere vorgesehen sein kann, dass der Filterkörper (9) des Filterelements (3) und ein Filterkörper (68) des Zusatzfilterelements (67) mittels einer gemeinsamen Endscheibe (72) axial begrenzt sind.

8. Filtereinrichtung nach Anspruch 7,
**dadurch gekennzeichnet,**
**dass** der Einsatz (4) an der gemeinsamen Endscheibe (72) integral ausgeformt ist.

9. Filtereinrichtung nach einem der Ansprüche 1 bis 8,
**dadurch gekennzeichnet,**
- **dass** ein Unterdrucköffnungsventil (52) zum Steuern einer fluidischen Verbindung zwischen einer Umgebung (53) des Gehäuses (2) und dem Filterinnenraum (11) vorgesehen ist,
- **dass** ein erstes Überdrucköffnungsventil (75) zum Steuern einer fluidischen Verbindung zwischen der Umgebung (53) des Gehäuses (2) und dem Filterinnenraum (11) vorgesehen ist,
- **dass** ein zweites Überdrucköffnungsventil (62) zum Steuern einer fluidischen Verbindung zwischen der Umgebung (53) des Gehäuses (2) und dem Filteraußenraum (12) vorgesehen ist.

## Claims

1. Filter device, in particular a liquid filter,
- having a housing (2) which has two housing connections (5, 6), of which the one housing connection (6) forms a clean-side outlet (8) and the other housing connection (5) forms a dirty-side inlet (7),
- having at least one filter element (3) which is inserted into the housing (2) and which has a filter body (9) which encloses a filter inner compartment (11) in the peripheral direction and is enclosed by a filter outer compartment (12) in the peripheral direction, which is enclosed, for its part, by the housing (2) in the peripheral direction, wherein the one compartment (12) belongs to a dirty side (13) fluidically connected to the inlet (7) and the other compartment (11) belongs to a clean side (14) fluidically connected to the outlet (8),
- having an insert (4) which is inserted into the housing (2), and fluidically connects the one housing connection (6) to the filter inner compartment (11),
- wherein an additional filter element (67) is arranged in the housing (2), **characterised in that**
- the insert (4) encloses an insert inner compartment (15) and is enclosed by an insert outer compartment (18),
- the insert outer compartment (18) is enclosed by the housing (2),
- the one housing connection (6) is fluidically connected to the insert inner compartment (15), whilst the other housing connection (5) is fluidically connected to the insert outer compartment (18),
- the two housing connections (5, 6) are arranged in the same axial section of the housing (2) and on the same side of the housing (2),
- the additional filter element (67) is arranged fluidically between the filter inner compartment (11) and the insert inner compartment (15).

2. Filter device according to claim 1,
**characterised in that**,
the insert (4) is formed integrally on the filter element (3).

3. Filter device according to claim 2,
**characterised in that**
the filter element (3) has two end caps (46, 50) which limit the filter body (9) axially, wherein the insert (4) is formed integrally on one of the end caps (46).

4. Filter device according to any one of claims 1 to 3,
**characterised in that**
the additional filter element (67) is arranged in the insert inner compartment (15).

5. Filter device according to claim 4,
**characterised in that**
a filter body (68) of the additional filter element (67) in the insert inner compartment (15) encloses an additional filter inner compartment (69) fluidically connected to the filter inner compartment (11) in the peripheral direction, wherein in particular it can be provided that the filter body (68) of the additional filter element (67) is limited on an axial side facing away from the filter inner compartment (11) with an end cap (70), which also limits the additional filter inner compartment (69) axially.

6. Filter device according to any one of claims 1 to 5,
**characterised in that**
the insert (4) is formed integrally on the additional filter element (67), wherein in particular it can be provided that the additional filter element (67) has two end caps (70, 71) which limit a filter body (68) of the additional filter element (67) axially, wherein the insert (4) is formed integrally on one of the end caps (71).

7. Filter device according to any one of claims 1 to 6,
**characterised in that**
the additional filter element (67) is formed integrally on the filter element (3), wherein in particular it can be provided that the filter body (9) of the filter element (3) and a filter body (68) of the additional filter element (67) are limited axially by means of a mutual end cap (72).

8. Filter device according to claim 7,
**characterised in that**
the insert (4) is formed integrally on the mutual end cap (72).

9. Filter device according to any one of claims 1 to 8,
**characterised in that**
- a vacuum opening valve (52) is provided to control a fluidic connection between a surrounding environment (53) of the housing (2) and the filter inner compartment (11),
- a first overpressure opening valve (75) is provided to control a fluidic connection between the surrounding environment (53) of the housing (2) and the filter inner compartment (11),
- a second overpressure opening valve (62) is provided to control a fluidic connection between the surrounding environment (53) of the housing (2) and the filter outer compartment (12).

## Revendications

1. Dispositif de filtration, notamment filtre de liquide,
- avec un corps (2), qui comporte deux raccords de corps (5, 6), dont un premier raccord de corps (6) forme une sortie côté propre (8) et dont l'autre raccord de corps (5) forme une entrée côté brut (7),
- avec au moins un élément de filtration (3), qui est placé dans le corps (2) et qui comporte un corps de filtre (9) qui entoure dans la direction circonférentielle un espace intérieur de filtre (11) et qui est entouré dans la direction circonférentielle par un espace extérieur de filtre (12), lequel est lui-même entouré dans la direction circonférentielle par le corps (2), l'espace (12) appartenant à un côté brut (13) relie pour la circulation des liquides à l'entrée (7) et l'autre espace (11) appartenant à un côté propre (14) relié pour la circulation des liquides à la sortie (8),
- avec un insert (4), qui est placé dans le corps (2) et qui relie pour la circulation des liquides le raccord de corps (6) à l'espace intérieur de filtre (11),
- un élément de filtration supplémentaire (67) étant agencé dans le corps (2),
**caractérisé en ce que**
- l'insert (4) entoure un espace intérieur d'insert (15) et est entouré par un espace extérieur d'insert (18),
- l'espace extérieur d'insert (18) est entouré par le corps (2),
- le raccord de corps (6) est relié pour la circulation des liquides à l'espace intérieur d'insert (15) tandis que l'autre raccord de corps (5) est relié pour la circulation des liquides à l'espace extérieur d'insert (18),
- les deux raccords de corps (5, 6) sont agencés dans le même tronçon axial du corps (2) et du même côté du corps (2),
- l'élément de filtration supplémentaire (67) est agencé quant à la circulation des liquides entre l'espace intérieur de filtre (11) et l'espace intérieur d'insert (15).

2. Dispositif de filtration selon la revendication 1, **caractérisé en ce que** l'insert (4) est formé d'un seul tenant sur l'élément de filtration (3).

3. Dispositif de filtration selon la revendication 2, **caractérisé en ce que** l'élément de filtration (3) comporte deux disques terminaux (46, 50) délimitant axialement le corps de filtre (9), l'insert (4) étant formé d'un seul tenant sur l'un des disques terminaux (46).

4. Dispositif de filtration selon l'une des revendications 1 à 3, **caractérisé en ce que** l'élément de filtration supplémentaire (67) est agencé dans l'espace intérieur d'insert (15).

5. Dispositif de filtration selon la revendication 4, **caractérisé en ce qu'**un corps de filtre (68) de l'élément de filtration supplémentaire (67) dans l'espace intérieur d'insert (15) entoure dans la direction circonférentielle un espace intérieur de filtration supplémentaire (69) relié pour la circulation des fluides à l'espace intérieur de filtre (11), sachant qu'il peut notamment être prévu que le corps de filtre (68) de l'élément de filtration supplémentaire (67) est délimité, sur un côté axial éloigné de l'espace intérieur de filtre (11), avec un disque terminal (70) qui délimite aussi axialement l'espace intérieur de filtration supplémentaire (69).

6. Dispositif de filtration selon l'une des revendications 1 à 5, **caractérisé en ce que** l'insert (4) est formé d'un seul tenant sur l'élément de filtration supplémentaire (67), sachant qu'il peut notamment être prévu que l'élément de filtration supplémentaire (67) comporte deux disques terminaux (70, 71) qui délimitent axialement un corps de filtre (68) de l'élément de filtration supplémentaire (67), l'insert (4) étant formé d'un seul tenant sur l'un des disques terminaux (71).

7. Dispositif de filtration selon l'une des revendications 1 à 6, **caractérisé en ce que** l'élément de filtration supplémentaire (67) est formé d'un seul tenant sur l'élément de filtration (3), sachant qu'il peut notamment être prévu que le corps de filtre (9) de l'élément de filtration (3) et un corps de filtre (68) de l'élément de filtration supplémentaire (67) sont délimités axialement au moyen d'un disque terminal commun (72).

8. Dispositif de filtration selon la revendication 7, **caractérisé en ce que** l'insert (4) est formé d'un seul tenant sur le disque terminal commun (72).

9. Dispositif de filtration selon l'une des revendications 1 à 8, **caractérisé en ce que**
- il est prévu une soupape d'ouverture en cas de dépression (52) pour commander une liaison fluidique entre un environnement (53) du corps (2) et l'espace intérieur de filtre (11),
- il est prévu une première soupape d'ouverture en cas de surpression (75) pour commander une liaison fluidique entre l'environnement (53) du corps (2) et l'espace intérieur de filtre (11),
- il est prévu une deuxième soupape d'ouverture en cas de surpression (62) pour commander une liaison fluidique entre l'environnement (53) du corps (2) et l'espace extérieur de filtre (12).
